# EUROPÄISCHE PATENTSCHRIFT

(11) **EP 3 888 973 B1**
(45) Veröffentlichungstag und Bekanntmachung des Hinweises auf die Patenterteilung: **24.04.2024**
(21) Anmeldenummer: 21020167.9
(22) Anmeldetag: 30.03.2021
(51) Int. Cl.: B60P 7/08, G01L 5/102, G01L 5/108, B60N 2/28

(54) **VORRICHTUNG ZUR ÜBERWACHUNG DER IN EINEM GURTBAND WIRKENDEN SPANNKRAFT**
DEVICE FOR MONITORING THE TENSION FORCE ACTING IN A BELT
DISPOSITIF DE SURVEILLANCE DE LA FORCE DE TENSION AGISSANT DANS UNE COURROIE

(30) Priorität: 03.04.2020 DE 102020109340
(43) Veröffentlichungstag der Anmeldung: 06.10.2021
(73) Patentinhaber: BPW Bergische Achsen KG, 51674 Wiehl (DE)
(72) Erfinder: Lamers, Christopher, 51063 Köln (DE); Essert, Adrian, 53127 Bonn (DE)
(74) Vertreter: DREISS Patentanwälte PartG mbB

(56) Entgegenhaltungen:
- US-A1- 2002 024 205
- US-A1- 2008 251 002
- US-A1- 2019 001 863

## Beschreibung

Die Erfindung betrifft eine Vorrichtung zur Überwachung der in einem Gurtband wirkenden Spannkraft, mit einem ein erstes Gehäuseteil und ein zweites Gehäuseteil umfassenden Gehäuse, einer Hindurchführung zwischen den Gehäuseteilen, mit mindestens zwei Auflageflächen für das Gurtband, einem in dem Gehäuse angeordneten und unter Druck gegen eine der Flachseiten des Gurtbandes anliegendes Sensorbauteil, und einer zwischen den Auflageflächen angeordneten Einrichtung zum Erfassen der Auslenkung des Sensorbauteils oder der Kraft auf das Sensorbauteil quer zur Gurtlängsrichtung, wobei die Gehäuseteile an zwei Gehäuserändern miteinander verbunden sind.

Eine solche Vorrichtung zur Überwachung der Spannkraft in einem der Ladungssicherung in einem Nutzfahrzeug dienenden Gurtband ist aus der DE 10 2018 115 599 A1 bekannt. Das aus zwei Gehäuseteilen bestehende Gehäuse der Vorrichtung ist entlang zweier Längsränder verriegelt. Zwischen den Gehäuseteilen wird ein Gurtband eingespannt, wobei dieses seitlich durch die Verriegelungen, die hier die Funktion einer Führung übernehmen, geführt wird. In dem Gehäuse ist auf dem einen Gehäuseteil eine Sensorbauteil befestigt, dass orthogonal in Form einer quer zum Gurtband laufenden Sensorleiste gegen das gespannte Gurtband drückt, wobei das Gurtband auf zwei Auflageflächen, die sich sowohl vor, als auch hinter der Sensorleiste erstrecken, auf dem anderen Gehäuseteil aufliegt. Andere ähnliche Vorrichtungen sind aus der US 2002/024205 A1, US 2008/251002 A1 und US 2019/001863 A1 bekannt.

Eine Vorrichtung zur Überwachung der in einem Gurtband wirkenden Spannkraft ist in der Regel für eine bestimmte Gurtbreite ausgelegt. Wird beispielsweise ein schmalerer Gurt in die Vorrichtung eingelegt, ist dieser nicht mehr durch die seitlichen Führungen des Gehäuses geführt, wodurch eine Ausrichtung der Vorrichtung in Längsrichtung des Gurtbandes nicht dauerhaft garantiert ist. Mithin kann sich die Vorrichtung verdrehen, wodurch die Messgenauigkeit negativ beeinflusst wird.

**Aufgabe** der Erfindung ist es daher, die Vorrichtung so zu gestalten, dass auch Gurtbänder unterschiedlicher Ausführungsformen, insbesondere unterschiedlicher Dicken und/oder Breiten, in die Vorrichtung aufgenommen und mit gleichbleibender Genauigkeit sensiert bzw. überwacht werden können.

Zur Lös u n g dieser Aufgabe wird eine Vorrichtung mit den Merkmalen des Anspruchs 1 vorgeschlagen. Diese Vorrichtung ist gekennzeichnet durch einen an dem Gehäuse befestigten Einsatz, an dem im Bereich der Auflageflächen für das Gurtband Führungselemente ausgebildet sind, wobei die Führungselemente durch ihren Abstand in Gurtquerrichtung die Breite der Auflageflächen für das Gurtband begrenzen.

Mit anderen Worten umfasst die Vorrichtung zwei Gehäuseteile und einen an mindestens einem der Gehäuseteile fixierten Einsatz, an dem im Bereich der Auflageflächen für das Gurtband Führungselemente zur Führung des Gurtbandes ausgebildet sind. Die Führungselemente begrenzen durch ihren Abstand in Gurtquerrichtung die Breite der Auflageflächen für das Gurtband und bewirken somit eine zuverlässige Geradführung des Gurtbandes auf dem Weg der Hindurchführung durch das Gehäuse. Der Einsatz lässt sich z.B. gegen einen Einsatz anderer Geometrie austauschen, um so die Führung des Gurtbandes gezielt an die jeweilige Dimension des Gurtbandes anpassen zu können.

Die Gehäuseteile sind parallel zu ihrer Längsachse z. B. an einer Seite über einen Scharnierrand beweglich zueinander gelagert. Abgewandt des Scharnierrands kann an den beiden Gehäuseteilen ein Verschlussrand ausgebildet sein, an dem die beiden Gehäuseteile zueinander verriegelt werden. In diesem Fall können Scharnier- und Verschlussrand mit Laschen für das Hindurchführen von verriegelnden Bolzen versehen sein. Neben der Funktion als Teile eines Scharniers bzw. eines Verschlusses können die Bereiche der Laschen zusätzlich als Führungsbereiche gestaltet sein, welche zwischen sich das Gurtband zu führen. In diesem Fall ist der Abstand zwischen in Gurtquerrichtung einander zugewandten Innenseiten der Laschen in etwa gleich groß wie die Breite des dazwischen hindurchgeführten Gurtbandes.

Daher wird mit einer Ausgestaltung vorgeschlagen, dass das Gehäuse an einem oder beiden Gehäuseteilen mit in Längsrichtung der Hindurchführung sich erstreckenden, gehäuseseitigen Führungselementen versehen ist, deren Abstand in Gurtquerrichtung größer ist als der Abstand zwischen den an dem Einsatz ausgebildeten Führungselementen.

In dem Gehäuse ist ein Sensorbauteil angeordnet. Das Sensorbauteil umfasst einen Sensor der ausgebildet ist, die Auslenkung des Sensorbauteils und/oder den Druck auf die Kontaktfläche des Sensorbauteils in Folge der Spannkraft in dem Gurtband zu erfassen, und in entsprechende Messsignale umzuwandeln, um so während des Transports der Ladegüter die Größe der aktuellen Gurtspannung zumindest stichpunktweise automatisch zu überwachen.

Das Sensorbauteil kann z. B. als ein mit einer Wägezelle arbeitender Kraftsensor ausgebildet sein. An den Wägezellen können Dehnungsmessstreifen angeordnet sein, um die Verformung der Wägezellen zu detektieren. Die Messgröße ist ein Maß für die Gurtspannkraft in Gurtband und wird über die Anzeige direkt am Gehäuse angezeigt bzw. zur jederzeitigen Kontrolle drahtlos an die externe Anzeigeeinheit, z. B. das Smartphone des Fahrers, übermittelt.

Der Sensor wird mittels eines Batteriemoduls mit elektrischer Energie versorgt. Das Batteriemodul ist in einem Batteriefach des Gehäuses angeordnet. Die Öffnung des Batteriefachs ist zu dem Gurtband hin ausgerichtet, um so einen Zugriff auf das Batteriemodul bei geschlossenem Gehäuse zu verhindern.

Um die Breite der Auflagefläche auch für Gurtbänder mit geringerem Durchmesser anzupassen und diese kontrolliert im Gehäuse zu führen, wird vorgeschlagen, einen Einsatz für das Gurtband auf der Auflagefläche zu befestigen.

Vorzugsweise ist der Einsatz an jenem der zwei Gehäuseteile angeordnet, welches zu dem Sensorbauteil gegenüberliegend ist. An dem Einsatz angeformt sind die Führungselemente. Diese erfüllen dieselbe Aufgabe wie die vorzugsweise an den Laschen ausgebildeten, gehäuseseitigen Führungselemente, nämlich zwischen sich eine Auflagefläche für eine bestimmte Gurtbreite aufzuspannen.

Insbesondere ist der Einsatz so dimensioniert, dass er zwischen den gehäuseseitigen Führungselementen angeordnet wird. Mithin wird so die Breite der Auflageflächen entsprechend einer anderen Gurtbreite angepasst, und so eine Befestigung der Vorrichtung an schmaleren Gurtbändern ermöglicht, bzw. das Einlegen schmalerer Gurtbänder in der Vorrichtung ermöglicht.

Insbesondere ist der Einsatz entsprechend der benötigten Breite des Gurtbandes adaptiv ausgebildet. Folglich kann je nach vorhandener Gurtbreite ein kompatibler Einsatz in der Vorrichtung befestigt werden, um dem Gurtband optimale Führung zu bieten. Ferner sind die modularen Einsätze im Betrieb durch das geschlossene Gehäuse gegen Herausfallen gesichert.

Vorzugsweise erstrecken sich die weiteren Führungselemente über die gesamte Länge des Gehäuses, wobei bevorzugt die weiteren Führungselemente eine korrespondierende Höhe zu einer Spalthöhe der Hindurchführung aufweisen. Die weiteren Führungselemente sind dazu eingerichtet die Hindurchführung in dem Maße zu begrenzen, dass die Auflagefläche der entsprechenden Gurtbreite angepasst wird und diesem eine Führung bietet, ferner eine Verdrehung dessen in der Vorrichtung zu vermeiden. Um den geführten Bereich des Gurtbandes möglichst zu maximieren, erstrecken sich die Führungselemente entlang der gesamten Längsrichtung der Vorrichtung. Damit kein Spalt zwischen dem Führungselement und der Höhe der Hindurchführung, also dem entstehenden Spalt zwischen den Innenseiten der beiden Gehäuseteile im geschlossenen Zustand, entsteht, in den das Gurtband rutschen und so seine Führung verlieren könnte, sind mithin die weiteren Führungselemente der Höhe der Hindurchführung angepasst.

Bevorzugt weisen der Einsatz und die weiteren Führungselemente eine Kontur auf, die dem Verlauf der Auflageflächen entspricht. Die Auflagebereiche des ersten Gehäuseteils sind entsprechend dem zweiten Gehäuseteil, insbesondere an die Kontur des Sensorbauteils, angepasst. Da das Gurtband beim Verspannen der Kontur der Hindurchführung, insbesondere auch der Ausnehmung der Vorrichtung folgt, sind auch der Einsatz und die Führungselemente dieser Kontur angepasst, um eine durchgehende Führung des Gurtbandes zu gewährleisten.

Vorzugsweise weist das dem Gehäuseteil mit dem Sensorbauteil gegenüberliegende Gehäuseteil innenseitig eine Wabenstruktur auf. Bei der auf dem straffen Gurtband installierten Vorrichtung treten große Kräfte auf. Diese resultieren aus dem in der Vorrichtung über das Sensorbauteil und an den Auflageflächen umgelenkten Gurtband. Um sowohl eine entsprechende Festigkeit der Gehäuseteile sicher zu stellen, wie eine zusätzliche Last am Gurtband durch ein zu hohes Gewicht der Vorrichtung zu vermeiden, Ist der erste Gehäuseteil auf der Innenfläche mit einer Wabenstruktur versehen. Die Wabenstruktur stellt eine materialsparende und trotzdem hochfeste Aussteifungsmöglichkeit dar.

Bevorzugt ist der Einsatz zumindest teilweise als Auflagefläche für die Flachseite des Gurtbandes in dessen Längsrichtung ausgebildet. Der Einsatz ist unter anderem dazu ausgebildet, die beiden weiteren Führungselemente miteinander zu verbinden und als Basis für die Befestigung an dem zum Sensorbauteil gegenüberliegendem zweiten Gehäuseteil zu dienen. Je nach Art des verwendeten Gurtbandes, ist der Einsatz auch als Verjüngung der Spalthöhe der Hindurchführung ausgelegt. Die Verjüngung ist erforderlich, um die Differenz der Gurtdicke, bei Verwendung eines Gurtes mit niedriger Höhe, auszugleichen und zugleich den Neigungswinkel der Gurtbandoberseite zwischen den Auflageflächen und dem Sensorbauteil konstant zu halten. Dies ist notwendig, um eine gleichbleibend, exakte Sensierung eines Gurtbandes mit geringerer Dicke gegenüber einem dickeren Gurtband zu ermöglichen.

Vorzugsweise weist der auf den Auflageflächen aufliegende Einsatz eine Dicke auf, wobei der Einsatz eine Spalthöhe zwischen sich und dem gegenüber liegendem zweiten Gehäuseteil ausbildet, die gleich oder größer der Dicke des Gurtbandes ist. Somit ist es möglich, dass das Gehäuseteil, welches das Sensorbauteil trägt, auf dem Gurtband aufliegt oder sich ein Luftspalt zwischen diesen bildet. Weitere Auflageflächen des Gurtbandes auf dem zweiten Gehäuseteil, welches das Sensorbauteil trägt, sind nicht zwingend erforderlich, da die Vorrichtung bereits durch das Sensorbauteil gegenüber den Auflageflächen des anderen Gehäuseteils ortsfest verspannt ist.

Bevorzugt weist der auf den Auflageflächen aufliegende Einsatz eine Dicke auf, die eine Spalthöhe zwischen sich und dem gegenüberliegenden zweiten Gehäuseteil ausbildet, die kleiner als die Dicke des Gurtbandes ist.

Ferner kann jedoch das Gurtband auch zwischen den beiden Gehäuseteilen eingespannt sein, wobei das Gehäuseteil, der das Sensorbauteil aufnimmt, ebenfalls Auflageflächen ausbildet, die komplementär zu den Auflageflächen des anderen Gehäuseteils ausgebildet sind. Durch diese Ausführungsform ist die Vorrichtung, neben der Verklemmung durch das Sensorbauteil, auch durch die den Gurt einklemmenden Auflageflächen beider Gehäuseteile gesichert. Jedoch darf die Spannkraft zwischen dem ersten und zweiten Bauteil nicht so groß sein, dass sie potentielle Belastungsschwankungen des Gurtbandes abfängt, die somit nicht vom Sensorbauteil registriert werden können. Folglich darf die Einspannung nur eine unterstützende Wirkung gegenüber der Einspannung durch die Auflageflächen und dem Sensorbauteil aufweisen.

Vorzugsweise weist der Einsatz stirnseitig zu den Hindurchführungen Stege auf, wobei die Stege jeweils die stirnseitigen Enden des ersten Gehäuseteils teilweise umschließen. Mit anderen Worten ist der Einsatz so ausgebildet, dass dieser an seinen stirnseitigen Enden Stege aufweist, die dazu eingerichtet sind, am ersten Gehäuseteil zu arretieren. Insbesondere handelt es sich dabei um ein Verrasten, wobei auch andere Verbindungsarten möglich sind.

Gemäß einer anderen Ausführungsform ist der Einsatz zweiteilig ausgebildet, wobei an beiden Teilen Führungselemente ausgebildet sind. Vorzugsweise sind die beiden Teileinsätze jeweils über Verbindungselemente am ersten der Gehäuseteile angeordnet.

Die beiden Führungselemente können auch getrennt voneinander und jeweils einzeln an den Auflageflächen angeordnet werden, wobei sie dazu mit dem Gehäuseteil verschraubt werden, beispielsweise können sie auch durch Formelemente in den Waben arretieren, ferner können sie auch durch weitere Methoden form-, reib- oder kraftschlüssig mit dem Gehäuseteil verbunden werden.

Weitere Maßnahmen werden nachstehend gemeinsam mit der Beschreibung von Ausführungsformen anhand der Figuren näher erläutert. Dabei zeigt:
- Fig. 1: eine perspektivische Ansicht der Vorrichtung mit integriertem Einsatz und eingelegtem Gurtband, gemäß einer ersten oder zweiten Ausführungsform,
- Fig. 2: eine perspektivische Ansicht der Vorrichtung mit integriertem Einsatz, gemäß einer ersten Ausführungsform,
- Fig. 3: eine perspektivische Ansicht der Vorrichtung mit integriertem Einsatz, gemäß einer zweiten Ausführungsform,
- Fig. 4: eine perspektivische Ansicht der Vorrichtung mit integriertem Einsatz, gemäß einer dritten Ausführungsform,
- Fig. 5: eine perspektivische Ansicht der Vorrichtung mit integriertem Einsatz, gemäß einer vierten Ausführungsform, und
- Fig. 6: ein schematischer Querschnitt der Vorrichtung und des Gurtbandes in Längsrichtung.

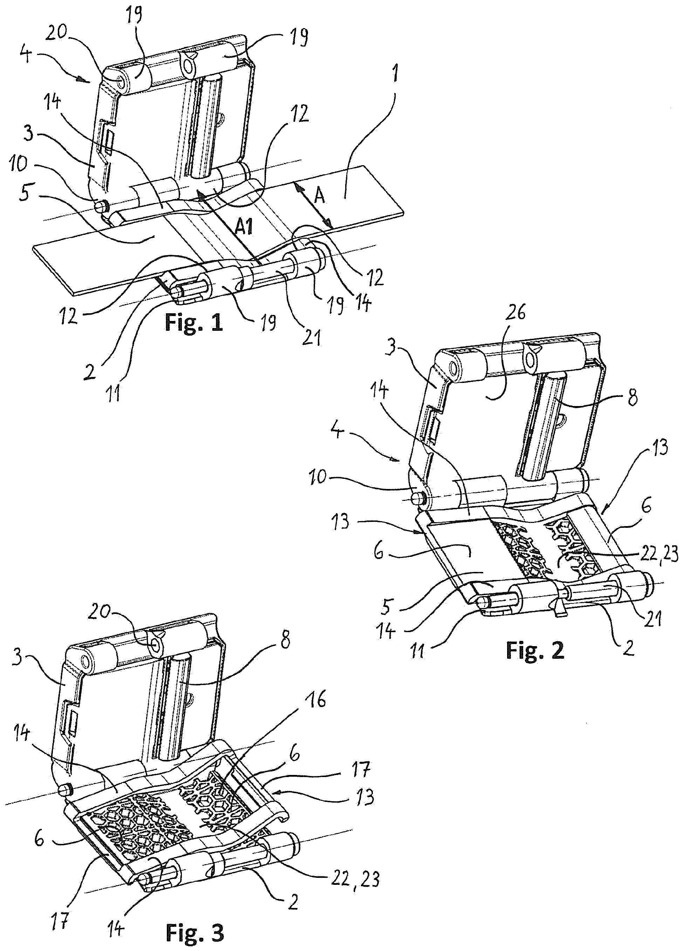

Die Figur 1 zeigt die Vorrichtung zur Überwachung der in einem Gurtband 1 wirkenden Spannkraft. Die Vorrichtung umfasst zwei Gehäuseteile 2, 3, wobei die Gehäuseteile 2, 3 parallel zu ihrer Längsachse an einer Seite über einen Gehäuserand in der Bauart eines Scharnierrandes 10 beweglich zueinander gelagert sind. Abgewandt des Scharnierrands 10 und parallel zu diesem ist an den beiden Gehäuseteilen 2, 3 ein Verschlussrand 11 ausgebildet, an dem die Gehäuseteile 2, 3 zueinander verriegelt werden.

Sowohl das Scharnier- als auch der Verschlussrand 10,11 sind durch Laschen 19 an den Gehäuserändern der beiden Gehäuseteile 2, 3 ausgebildet, wobei die Laschen 19 beider Gehäuseteile 2,3 komplementär zueinander ausgebildet sind und jeweils fluchtende und koaxiale Bohrungen 20 aufweisen. Durch einen Bolzen 21, der koaxial in den Bohrungen 20 der Laschen 19 des Scharnierrandes 10 angeordnet wird, werden die beiden Gehäuseteile 2, 3 mit dem Bolzen 21 als Drehachse gelagert. Durch einen weiteren, nicht dargestellten Bolzen, der in den Bohrungen 20 des Verschlussrandes 11 angeordnet werden würde, würden dort die beiden Gehäuseteile 2, 3 zueinander versperrt werden.

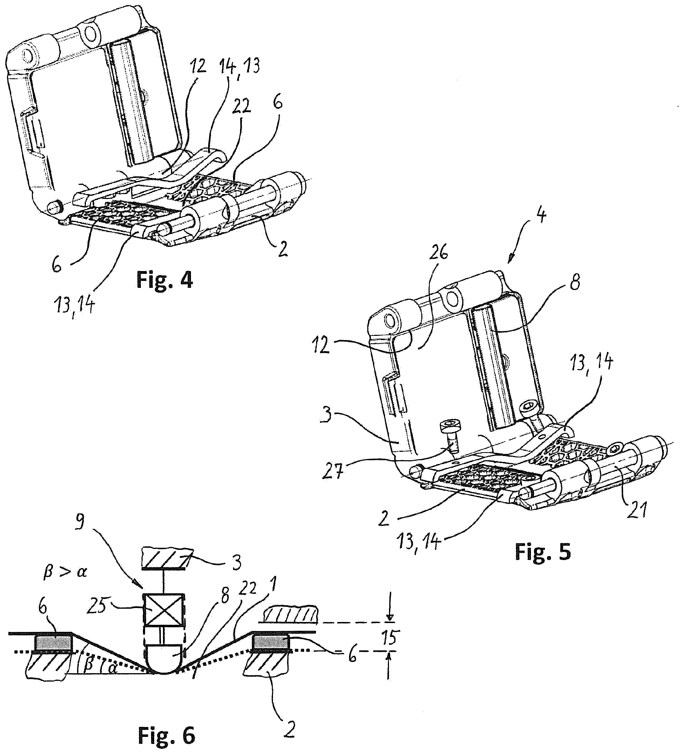

Neben der Funktion als Teil des Scharniers, bzw. des Verschlusses, haben die Laschen 19 die weitere Funktion, gehäuseseitige Führungselemente 12 zu sein, wozu die Laschen 19 so gestaltet sind, dass sie in Gurtquerrichtung einen Abstand A1 aufweisen, der die Breite der Gurtbandführung für das Gurtband 1 ist. Dazu spannen die Laschen 19 der zwei Gehäuseränder 10, 11 zwischen sich eine Fläche auf. Ausgebildet wird diese Fläche durch Anlageflächen 6 für das Gurtband (Fig. 3, Fig. 4), welche sich an jenem ersten Gehäuseteil 2 befinden, welches einem Sensorbauteil 8 gegenüberliegt. Der in Gurtquerrichtung bestehende Abstand A1 zwischen den einander zugewandten Rändern der Laschen 19 ist daher der entsprechenden Breite des hindurchzuführenden Gurtbandes 1 angepasst.

Um die Vorrichtung, bzw. die Breite der Auflageflächen 6 auch für ein schmaleres Gurtband 1 mit geringerer Breite anzupassen, ist an dem ersten Gehäuseteil 2, welches dem Sensorbauteil 8 gegenüber liegt, wahlweise ein Einsatz 13 befestigbar, an dem im Bereich der Auflageflächen 6 des Gurtbandes 1 als Ergänzung zu den gehäuseseitigen Führungselementen 12 mit dem Abstand A1 weitere Führungselemente 14 mit einem im Vergleich geringeren Abstand A ausgebildet sind.

Vorzugsweise erstrecken sich die weiteren Führungselemente 14 über die gesamte Länge des Gehäuses 4, wobei sie aufgrund ihres in Querrichtung bestehenden Abstands A die Breite der Auflageflächen 6 beschränken. Ferner sind die Führungselemente 14 mit dem Einsatz 13 monolithisch ausgebildet. Für den Einsatz 13 wird ein zäher Kunststoff verwendet, wobei auch andere Kunststoffkonsistenzen verwendet werden können, beispielsweise kann der Einsatz 13 auch aus Aluminium oder einem anderen Leichtmetall hergestellt sein.

Gemäß der Figuren 2 bis 5 weist das dem Sensorbauteil 8 gegenüberliegende erste Gehäuseteil 2 innenseitig im Bereich der Auflageflächen 6 eine Wabenstruktur 16 auf. Ferner weist die Wabenstruktur 16 dort, wo das Sensorbauteil 8 gegenüberliegt, eine Ausnehmung 22 auf. Die Ausnehmung 22 verläuft quer zur Verlaufsrichtung des Gurtbandes 1.

Das Sensorbauteil 8 ist senkrecht zur Längsrichtung des Gurtbandes 1 beweglich in dem zweiten Gehäuseteil 3 angeordnet. Bei geöffnetem Gehäuse 4 liegt das Sensorbauteil 8 in einer maximalen Verlagerungsposition vor, in der sich das Sensorbauteil 8 maximal in die Ausnehmung 22 in dem ersten Gehäuseteil 2 hinein erstreckt. Auch nach dem Einlegen des Gurtbandes 1 und dem Schließen Gehäuses 4 liegt das Sensorbauteil 8 zunächst in der maximalen Verlagerungsposition vor. Wird dann aber das Gurtband 1 unter Spannung gesetzt, so bewegt sich das Sensorbauteil 8 durch den auf das Sensorbauteil 8 wirkenden Druck des Gurtbandes 1 zu dem ersten Gehäuseteil 2, welches die Auflageflächen 6 des Gurtbandes 1 bildet hin, wobei sich das Sensorbauteil 8 also senkrecht zur Längsrichtung des Gurtbandes 1 bewegt.

Der Sensor 25 wird mittels eines Batteriemoduls 26 mit elektrischer Energie versorgt. Das Batteriemodul 26 ist in einem Batteriefach des Gehäuses 4 angeordnet. Die Öffnung des Batteriefachs ist zu dem Gurtband 1 hin ausgerichtet, um einen Zugriff auf das Batteriemodul 26 bei geschlossenem Gehäuse 4 zu verhindern.

Zu der Ausnehmung 22 im Gehäuseteil 2 weisen Einsatz 13 und Führungselemente 14 eine Kontur auf, die dem Verlauf der Auflageflächen 6, insbesondere der Ausnehmung 22 entspricht. Die weiteren Führungselemente 14 beschränken die Beabstandung der Auflageflächen 6 somit nicht nur im Bereich in der das Gurtband 1 zur Anlage kommt, sondern auch in dem Bereich, wo das Gurtband 1 die Ausnehmung 22 durchläuft.

Figur 2 offenbart einen Einsatz 13, der zumindest teilweise als Auflagefläche 6 für das Gurtband 1 in dessen Längsrichtung ausgebildet ist. Die Auflagefläche 6 an dem Einsatz 13 erstreckt sich über die Breite des Abstands A und im ganzen Bereich, wo ein Aufliegen des gespannten Gurtbandes 1 zu erwarten ist. Im Bereich der Ausnehmung 22, wo es nicht zu einer Auflage des Gurtbandes 1 an einem Gehäuseteil 2, 3 kommt, kann sich im Einsatz 13 eine Aussparung 23 in Form einer Öffnung befinden.

Figur 3 zeigt eine Ansicht der Vorrichtung mit integriertem Einsatz 13 gemäß einer zweiten Ausführungsform, wobei der Einsatz 13 stirnseitig zu den Hindurchführungen 5 für das Gurtband Stege 17 aufweist, wobei die Stege 17 jeweils die stirnseitigen Enden des ersten Gehäuseteils 2 teilweise umschließen. Mit anderen Worten sind an dem längsseitigen Ende des Einsatzes 13 Stege 17 in Form eines Clips ausgebildet, wobei an den stirnseitigen Enden des ersten Gehäuseteils 2, an dem der Einsatz 13 zum Aufliegen kommen soll, eine zu den Clips komplementäre Formen gegeben ist, an denen der Clip einrasten und arretieren kann.

Bei Figur 3 dienen die Stege 17 des Einsatzes 13 nur als Verbindungselemente zwischen den Führungselementen 14. Der Bereich der innenseitigen Auflageflächen 6 des Gurtbandes 1 am ersten Gehäuseteil 2 wird bei dieser Ausführung nicht von dem Einsatz 13 überspannt. Folglich findet keine Erhöhung der Auflageflächen 6 wie bei Figur 2 statt. Lediglich in den Endbereichen der Vorrichtung, im Bereich der Stege 17, stellt der Einsatz 13 eine fluchtende Fortsetzung zu den Auflageflächen 6 des ersten Gehäuseteils 2 dar.

Figur 4 zeigt in einer Ausführungsform eine weitere Vorrichtung mit integriertem Einsatz 13, wobei der Einsatz 13 zweiteilig ausgebildet ist, und zwei einzelne Führungselemente 14 umfasst. Mit anderen Worten sind die sich gegenüberliegenden Führungselemente 14 nicht durch Teile des Einsatzes 13 miteinander verbunden. Folglich wird jedes der beiden Führungselemente 14 einzeln an den Auflageflächen 6 befestigt. Dies geschieht über Formelemente 24 auf der Unterseite der weiteren Führungselemente 14, bzw. der Einsätze 13, die ein komplementäre Struktur zu der Wabenstruktur 16 des erste Gehäuseteils 2 aufweisen, und zur lösbaren Befestigung in den Öffnungen der Wabenstruktur 16 form- und reibschlüssig arretierbar sind.

Bei der Variante Figur 5 werden die Führungselemente 14 über Bohrungen 20 an den Auflageflächen 6 des entsprechenden ersten Gehäuseteils 2 form- und reibschlüssig durch Verbindungselemente 27 in Form von Schrauben befestigt, wobei der Einsatz 13 von Figur 4 und 5 ansonsten baugleich ausgebildet sind. Auch dies ist daher eine lösbare und damit reversible Befestigung des Einsatzes 13

Figur 6 zeigt einen stark schematischen Querschnitt der Vorrichtung in Längsrichtung. Gezeigt ist, in Verbindung mit Figur 2, die Wirkung des Einsatzes als Erhöhung der Auflageflächen 6 in Bezug zum Sensorbauteil 8, um auch bei einem Gurtband 1 mit geringerer Dicke den benötigten Neigungswinkel β des Gurtbandes 1 zwischen den Auflageflächen 6 und dem Sensorbauteil 8 herzustellen. Würde bei einem dünneren Gurtband 1 kein Einsatz zur Erhöhung der Auflageflächen 6 verwendet werden, wäre der Winkel α, mit dem das Gurtband 1 auf das Sensorbauteil 8 trifft zu gering und würde von dem Winkel β bei Verwendung eines dickeren Gurtbandes 1 abweichen. Dies würde zu einer Minderung der Messgenauigkeit des Sensorbauteils 8 führen. Ferner könnte der flachere Winkel α auch zu einer Reduzierung der Haftreibung der Vorrichtung am Gurtband 1 führen, sodass die Vorrichtung im Betrieb, insbesondere bei Erschütterungen, verrutschen könnte.

### Bezugszeichen

- 1: Gurtband
- 2: erstes Gehäuseteil
- 3: zweites Gehäuseteil
- 4: Gehäuse
- 5: Hindurchführung
- 6: Auflagefläche
- 8: Sensorbauteil
- 9: Einrichtung
- 10: Scharnierrand, Gehäuserand
- 11: Verschlussrand, Gehäuserand
- 12: gehäuseseitiges Führungselement
- 13: Einsatz
- 14: Führungselement
- 15: Spalthöhe der Hindurchführung
- 16: Wabenstruktur
- 17: Steg
- 19: Lasche
- 20: Bohrung
- 21: Bolzen
- 22: Ausnehmung
- 23: Aussparung
- 25: Sensor
- 26: Batteriemodul
- 27: Verbindungselement

- A: Abstand in Querrichtung
- A1: Abstand in Querrichtung

## Patentansprüche

1. Vorrichtung zur Überwachung der in einem Gurtband (1) wirkenden Spannkraft, mit einem ein erstes Gehäuseteil (2) und ein zweites Gehäuseteil (3) umfassenden Gehäuse (4), einer Hindurchführung (5) zwischen den Gehäuseteilen (2, 3), mit mindestens zwei Auflageflächen (6) für das Gurtband (7), einem in dem Gehäuse (4) angeordneten und unter Druck gegen eine der Flachseiten des Gurtbandes (7) anliegenden Sensorbauteil (8), und einer zwischen den Auflageflächen (6) angeordneten Einrichtung zum Erfassen der Auslenkung des Sensorbauteils (8) oder der Kraft auf das Sensorbauteil (8) quer zur Gurtlängsrichtung, wobei die Gehäuseteile (2, 3) an zwei Gehäuserändern (10, 11) miteinander verbunden sind, wobei die Vorrichtung einen an dem Gehäuse befestigten Einsatz (13) aufweist, an dem im Bereich der Auflageflächen (6) für das Gurtband (7) Führungselemente (14) ausgebildet sind, **dadurch gekennzeichnet, dass** die Führungselemente (14) durch ihren Abstand (A) in Gurtquerrichtung die Breite der Auflageflächen (6) für das Gurtband (7) begrenzen.

2. Vorrichtung nach Anspruch 1, **dadurch gekennzeichnet, dass** sich die Führungselemente (14) über die gesamte Länge des Gehäuses (4) erstrecken.

3. Vorrichtung nach Anspruch 1 oder 2, **dadurch gekennzeichnet, dass** die Führungselemente (14) eine korrespondierende Höhe zu einer Spalthöhe (15) der Hindurchführung (5) aufweisen.

4. Vorrichtung nach einem der vorhergehenden Ansprüche, **dadurch gekennzeichnet, dass** der Einsatz (13) und die Führungselemente (14) eine Kontur aufweisen, die dem Verlauf der Auflageflächen (6) entspricht.

5. Vorrichtung nach einem der vorhergehenden Ansprüche, **dadurch gekennzeichnet, dass** das dem Sensorbauteil (8) gegenüberliegende erste Gehäuseteil (2) innenseitig eine Wabenstruktur (16) aufweist.

6. Vorrichtung nach einem der vorhergehenden Ansprüche, **dadurch gekennzeichnet, dass** der Einsatz (13) an jenem der Gehäuseteile (2, 3) angeordnet ist, welches zu dem Sensorbauteil (8) gegenüberliegend ist.

7. Vorrichtung nach einem der vorhergehenden Ansprüche, **dadurch gekennzeichnet, dass** der Einsatz (13) zumindest teilweise als Auflagefläche (6) der Flachseite des Gurtbandes (7) in dessen Längsrichtung ausgebildet ist.

8. Vorrichtung nach einem der vorhergehenden Ansprüche, **dadurch gekennzeichnet, dass** der auf den Auflageflächen (6) aufliegende Einsatz (13) eine Dicke aufweist, wobei der Einsatz eine Spalthöhe (15) zwischen sich und dem gegenüberliegenden zweiten Gehäuseteil (3) ausbildet, die gleich oder größer der Dicke des Gurtbandes (7) ist.

9. Vorrichtung nach einem der Ansprüche 1 bis 7, **dadurch gekennzeichnet, dass** der auf den Auflageflächen (6) aufliegende Einsatz (13) eine Dicke aufweist, die eine Spalthöhe (15) zwischen sich und dem gegenüberliegenden zweiten Gehäuseteil (3) ausbildet, die kleiner als die Dicke des Gurtbandes (7) ist.

10. Vorrichtung nach einem der vorhergehenden Ansprüche, **dadurch gekennzeichnet, dass** der Einsatz (13) stirnseitig zu den Hindurchführungen (5) Stege (17) aufweist, wobei die Stege (17) jeweils die stirnseitigen Enden des ersten Gehäuseteils (2) teilweise umschließen.

11. Vorrichtung nach Anspruch 1 bis 6, **dadurch gekennzeichnet, dass** der Einsatz (13) zweiteilig ausgebildet ist, wobei beide Teile des zweiteiligen Einsatzes (13) jeweils als Führungselement (14) ausgebildet sind.

12. Vorrichtung nach Anspruch 11, **dadurch gekennzeichnet, dass** nur ein Führungselement (14) des zweiteiligen Einsatzes (13) an der Auflagefläche (6) befestigt ist.

13. Vorrichtung nach Anspruch 12, **dadurch gekennzeichnet, dass** das eine Führungselement (14) angrenzend zu einem der beiden gehäuseseitigen Führungselemente (12) befestigt ist.

14. Vorrichtung nach einem der Ansprüche 11 bis 13, **dadurch gekennzeichnet, dass** die Teile des zweiteiligen Einsatzes (13) jeweils über Verbindungselemente (27) am ersten Gehäuseteil (2) angeordnet sind.

15. Vorrichtung nach einem der vorhergehenden Ansprüche, **dadurch gekennzeichnet, dass** das Gehäuse (4) an einem oder beiden Gehäuseteilen (2, 3) mit in Längsrichtung der Hindurchführung (5) sich erstreckenden, gehäuseseitigen Führungselementen (12) versehen ist, deren Abstand (A1) in Gurtquerrichtung größer ist als der Abstand (A) zwischen den an dem Einsatz (13) ausgebildeten Führungselementen (14).

## Claims

1. Device for monitoring the clamping force acting in a belt webbing (1), comprising a housing (4) that has a first housing part (2) and a second housing part (3), a through-guide (5) between the housing parts (2, 3), which through-guide has at least two support surfaces (6) for the belt webbing (7), a sensor component (8), which is arranged in the housing (4) and, by being pressed, rests against one of the flat sides of the belt webbing (7), and a means arranged between the support surfaces (6) for detecting the deflection of the sensor component (8) or the force on the sensor component (8) transversely to the longitudinal direction of the belt, wherein the housing parts (2, 3) are connected to one another at two housing edges (10, 11), wherein the device has an insert (13) fastened to the housing, on which insert guide elements (14) are formed in the region of the support surfaces (6) for the belt webbing (7), **characterized in that** the guide elements (14) delimit the width of the support surfaces (6) for the belt webbing (7) by means of the distance (A) between said guide elements in the belt transverse direction.

2. Device according to claim 1, **characterized in that** the guide elements (14) extend over the entire length of the housing (4).

3. Device according to claim 1 or claim 2, **characterized in that** the guide elements (14) have a height corresponding to a gap height (15) of the through-guide (5).

4. Device according to any of the preceding claims, **characterized in that** the insert (13) and the guide elements (14) have a contour which corresponds to the shape of the support surfaces (6).

5. Device according to any of the preceding claims, **characterized in that** the inside of the first housing part (2) opposite the sensor component (8) has a honeycomb structure (16).

6. Device according to any of the preceding claims, **characterized in that** the insert (13) is arranged on the particular housing part of the housing parts (2, 3) which is opposite the sensor component (8).

7. Device according to any of the preceding claims, **characterized in that** the insert (13) is designed at least in part as a support surface (6) of the flat side of the belt webbing (7) in the longitudinal direction thereof.

8. Device according to any of the preceding claims, **characterized in that** the insert (13) resting on the support surfaces (6) has a thickness, wherein the insert forms a gap height (15) between itself and the oppositely located second housing part (3), which gap height is equal to or greater than the thickness of the belt webbing (7).

9. Device according to any of claims 1 to 7, **characterized in that** the insert (13) resting on the support surfaces (6) has a thickness which forms a gap height (15) between itself and the oppositely located second housing part (3), which gap height is smaller than the thickness of the belt webbing (7).

10. Device according to any of the preceding claims, **characterized in that** the insert (13) has bridge portions (17) at the end face with respect to the through-guides (5), wherein the bridge portions (17) in each case partially surround the end-face ends of the first housing part (2).

11. Device according to claims 1 to 6, **characterized in that** the insert (13) is formed in two parts, wherein both parts of the two-part insert (13) are each designed as a guide element (14).

12. Device according to claim 11, **characterized in that** only one guide element (14) of the two-part insert (13) is fastened to the support surface (6).

13. Device according to claim 12, **characterized in that** that one guide element (14) is fastened adjacently to one of the two housing-side guide elements (12).

14. Device according to any of claims 11 to 13, **characterized in that** the parts of the two-part insert (13) are each arranged on the first housing part (2) via connecting elements (27).

15. Device according to any of the preceding claims, **characterized in that** the housing (4) is provided on one or both housing parts (2, 3) with housing-side guide elements (12) extending in the longitudinal direction of the through-guide (5), the distance (A1) between which guide elements is greater in the belt transverse direction than the distance (A) between the guide elements (14) formed on the insert (13).

## Revendications

1. Dispositif permettant la surveillance de la force de tension agissant dans une sangle (1), comportant un boîtier (4) comprenant une première partie de boîtier (2) et une seconde partie de boîtier (3), un guidage traversant (5) entre les parties de boîtier (2, 3), comportant au moins deux surfaces d'appui (6) pour la sangle (7), un composant formant capteur (8) disposé dans le boîtier (4) et reposant sous pression contre l'un des côtés plats de la sangle (7), et un appareil disposé entre les surfaces d'appui (6) et permettant de détecter la déviation du composant formant capteur (8) ou la force exercée sur le composant formant capteur (8) transversalement à la direction longitudinale de sangle, dans lequel les parties de boîtier (2, 3) sont reliées l'une à l'autre au niveau de deux bords de boîtier (10, 11), dans lequel le dispositif présente un insert (13) fixé au boîtier, sur lequel insert sont formés des éléments de guidage (14) dans la zone des surfaces d'appui (6) pour la sangle (7),
**caractérisé en ce que** les éléments de guidage (14) limitent par leur écartement (A), dans la direction transversale de sangle, la largeur des surfaces d'appui (6) pour la sangle (7).

2. Dispositif selon la revendication 1, **caractérisé en ce que** les éléments de guidage (14) s'étendent sur toute la longueur du boîtier (4).

3. Dispositif selon la revendication 1 ou 2, **caractérisé en ce que** les éléments de guidage (14) présentent une hauteur correspondant à une hauteur de fente (15) du guidage traversant (5).

4. Dispositif selon l'une des revendications précédentes,
**caractérisé en ce que** l'insert (13) et les éléments de guidage (14) présentent un contour qui correspond au tracé des surfaces d'appui (6).

5. Dispositif selon l'une des revendications précédentes,
**caractérisé en ce que** la première partie de boîtier (2) opposée au composant formant capteur (8) présente une structure en nid d'abeille (16) côté intérieur.

6. Dispositif selon l'une des revendications précédentes,
**caractérisé en ce que** l'insert (13) est disposé sur la partie de boîtier parmi les parties de boîtier (2, 3) qui est opposée au composant formant capteur (8).

7. Dispositif selon l'une des revendications précédentes, **caractérisé en ce que** l'insert (13) est formé au moins partiellement sous forme de surface d'appui (6) du côté plat de la sangle (7) dans sa direction longitudinale.

8. Dispositif selon l'une des revendications précédentes, **caractérisé en ce que** l'insert (13) s'appuyant sur les surfaces d'appui (6) présente une épaisseur, dans lequel l'insert forme une hauteur de fente (15) entre celui-ci et la seconde partie de boîtier (3) opposée, laquelle hauteur de fente est égale ou supérieure à l'épaisseur de la sangle (7).

9. Dispositif selon l'une des revendications 1 à 7, **caractérisé en ce que** l'insert (13) s'appuyant sur les surfaces d'appui (6) présente une épaisseur qui forme une hauteur de fente (15) entre celui-ci et la seconde partie de boîtier (3) opposée, laquelle hauteur de fente est inférieure à l'épaisseur de la sangle (7).

10. Dispositif selon l'une des revendications précédentes, **caractérisé en ce que** l'insert (13) présente des entretoises (17) côté frontal par rapport aux guidages traversants (5), dans lequel les entretoises (17) entourent partiellement respectivement les extrémités côté frontal de la première partie de boîtier (2).

11. Dispositif selon les revendications 1 à 6, **caractérisé en ce que** l'insert (13) est formé en deux parties, dans lequel les deux parties de l'insert (13) en deux parties sont formées respectivement comme élément de guidage (14).

12. Dispositif selon la revendication 11, **caractérisé en ce qu'**un seul élément de guidage (14) de l'insert (13) en deux parties est fixé à la surface d'appui (6).

13. Dispositif selon la revendication 12, **caractérisé en ce que** l'élément de guidage (14) est fixé de manière adjacente à l'un des deux éléments de guidage (12) côté boîtier.

14. Dispositif selon l'une des revendications 11 à 13, **caractérisé en ce que** les parties de l'insert (13) en deux parties sont disposées sur la première partie de boîtier (2) respectivement par l'intermédiaire d'éléments de liaison (27).

15. Dispositif selon l'une des revendications précédentes,
**caractérisé en ce que** le boîtier (4) est pourvu, sur une partie de boîtier ou sur les deux parties de boîtier (2, 3), d'éléments de guidage (12) côté boîtier s'étendant dans la direction longitudinale du guidage traversant (5), dont l'écartement (A1) dans la direction transversale de sangle est supérieur à l'écartement (A) entre les éléments de guidage (14) formés sur l'insert (13).
